# EUROPEAN PATENT SPECIFICATION

(11) **EP 2 447 853 B1**
(45) Date of publication and mention of the grant of the patent: **22.04.2015**
(21) Application number: 11187185.1
(22) Date of filing: 28.10.2011
(51) Int. Cl.: G06F 15/78

(54) **Multiprocessor with private and shared memories.**
Multiprozessor mit privaten und gemeinsamen Speichern
Multiprocesseur avec mémoires privé et partagé

(30) Priority: 29.10.2010 IT RM20100572
(43) Date of publication of application: 02.05.2012
(73) Proprietor: Strollo, Elio, 00136 Rome (IT)
(72) Inventor: Strollo, Elio, 00136 Rome (IT)
(74) Representative: Carangelo, Pierluigi

(56) References cited:
- EP-A1- 0 626 658
- EP-A2- 0 446 721
- US-A- 4 740 894
- US-A1- 2003 200 378
- US-B1- 6 279 088
- MARCO LANUZZA ET AL: "A New Reconfigurable Coarse-Grain Architecture for Multimedia Applications", ADAPTIVE HARDWARE AND SYSTEMS, 2007. AHS 2007. SECOND NASA/ESA CONFERENCE ON, IEEE, PISCATAWAY, NJ, USA, 1 August 2007 (2007-08-01), pages 119-126, XP031128137, ISBN: 978-0-7695-2866-3
- RANGAN K K ET AL: "A distributed multiple-SIMD processor in memory", PARALLEL PROCESSING, INTERNATIONAL CONFERENCE ON, 2001. SEP. 3-7, 2001, PISCATAWAY, NJ, USA,IEEE, 3 September 2001 (2001-09-03), pages 507-514, XP010558338, ISBN: 978-0-7695-1257-0

## Description

### INTRODUCTION:

Multiprocessor architectures have been an object of study for a long time.. Different models and structures of computers with various processors have been conceived over the years. One of the first features that we want to implement is to increase the processing power and therefore the system performance.

The multiprocessor microcomputer/microcontroller of the present disclosure belongs to the symmetric multiprocessor systems category (SMP Symmetric Multiprocessor) with similar processors (homogeneous multiprocessor), with private and shared memory, with the same type of access at the same time to the shared memory (UMA Uniform Memory Access), with simultaneous access to shared memory (PRAM Parallel Random Access Machine), in which the write access in the shared memory can occur simultaneously (CRCW Concurrent Read Concurrent Write).

In existing architectures, both with distinct components and with completely integrated systems, the tendency is to combine more "core" of processors by using various types of communication buses shared among more components.

In this invention the multiprocessor architecture is built around the idea of developing a microcomputer/microcontroller that contains many simple processors, strongly connected on a single chip or that could be implemented with programmable logics (FPGA). The innovative microcomputer/microcontroller presented here, is intended for the development of dedicated (embedded) systems and is conceived with the objective of obtaining an improved microcomputer/microcontroller which has separately or in combination, some advantageous features for its use in these systems such as: high overall computational capacity related to the clock frequency, high expandability of the microcomputer/microcontroller multiprocessor, high overall programming simplicity, a totally deterministic operation.

In addition, the technology described herein allows various chips to be connected together, enabling the processors of distinct chips to work together easily and to allocate the available memory banks to the processors in various ways. This characteristic provides an innovative expandable and scalable multiprocessor platform.

The above objective is obtained through a microcomputer/ microcontroller as defined and described in the main claim, in its more general embodiment, and in the dependent claims in its particular and optional embodiments.

Further features and advantages of the above microcomputer/microcontroller will be revealed in the foregoing detailed description, carried out purely as a non limitative example with regard to the attached drawings in which:
- figure 1 schematically represents the basic architecture of the microcomputer/micro controller multiprocessor;
- figure 2 represents the block diagram of a processor of the multiprocessor microcomputer/microcontroller illustrated in figure 1, in which RAM means the whole location vector of addressable data memory divided in a first part corresponding to locations of a private RAM memory (PRAM) associated to each processor and in a second part corresponding to a shared location of a common RAM memory (CRAM);
- figure 3 represents the block diagram of the shared RAM (CRAM) of the microcomputer/microcontroller multiprocessor of figure 1;
- figure 4 represents a possible temporal diagram of data (val) movement, which is written to a location of the shared RAM of a microcomputer/microcontroller multiprocessor, through the serial transceivers in another location of the shared RAM of another microcomputer/microcontroller multiprocessor;
- figure 5 represents an example of a connection of five microcomputers/microcontrollers multiprocessors through some serial connections (sc);
- figure 6 represents a parallel connection of the lines (for example, 64 lines) present in each multiprocessor chip that can be connected internally to the chip through switches to the serial transceivers (for example, 16 serial transceivers) presents in the multiprocessor chip;
- figure 7 represents an example of physical overlap of a certain number of multiprocessor chips (for example, 16 chips) and of an lateral electric interconnection of the lines that constitute the serial channels;
- figure 8 represents an example of a reconfigurable system based on FPGA obtained by connecting together a number of FPGA containing multiprocessor microcontrollers;
- figure 9 represents a computer model based on a number of parallel processors that work directly on a shared memory; and
- figure 10 is a draft of a partial design of one of the many stackable packages that it is possible to develop.

### DETAILED DESCRIPTION OF THE INVENTION:

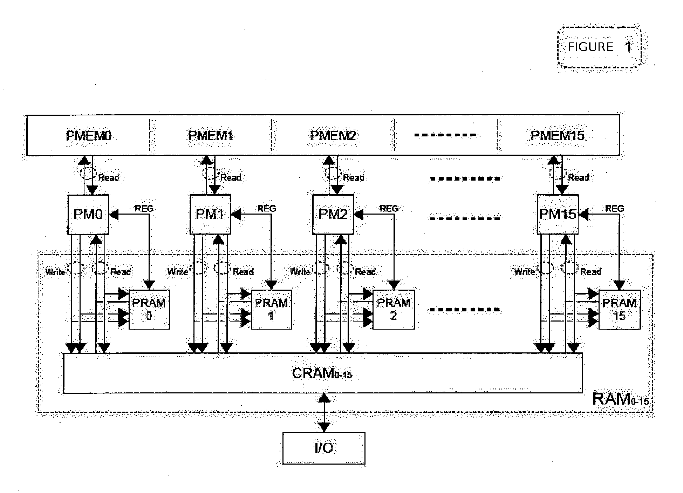

In a preferred embodiment, the microcomputer/microcontroller device (here on referred to also as only microcontroller or microcomputer) includes 16 processing modules (PM0, ... PM15), or processors, with an architecture similar to the one shown in figure 1.

The microcomputer/microcontroller device has a memory for the program (PMEM0, ... PMEM15) developed as multiport memory from which the plurality of processors read the instructions to be executed. In alternative, a number of distinct complete or partial memories can be used, for example 16 distinct memories in the specific case described.

Each processor or processing unit PM0, ... PM15 has its own data memory RAM type, which is a private RAM, hereafter described as PRAM0, ... PRAM15.

Furthermore a multi-port shared RAM memory is available, accessible from all processors which is a common RAM, indicated hereafter as CRAM.

Input/output (I/O) is mapped in the shared RAM, which means that the external communication lines of the microcontroller are connected to location of the shared RAM.

The data and the addresses of the memories have the same size, for example equal to 16 bit or more.

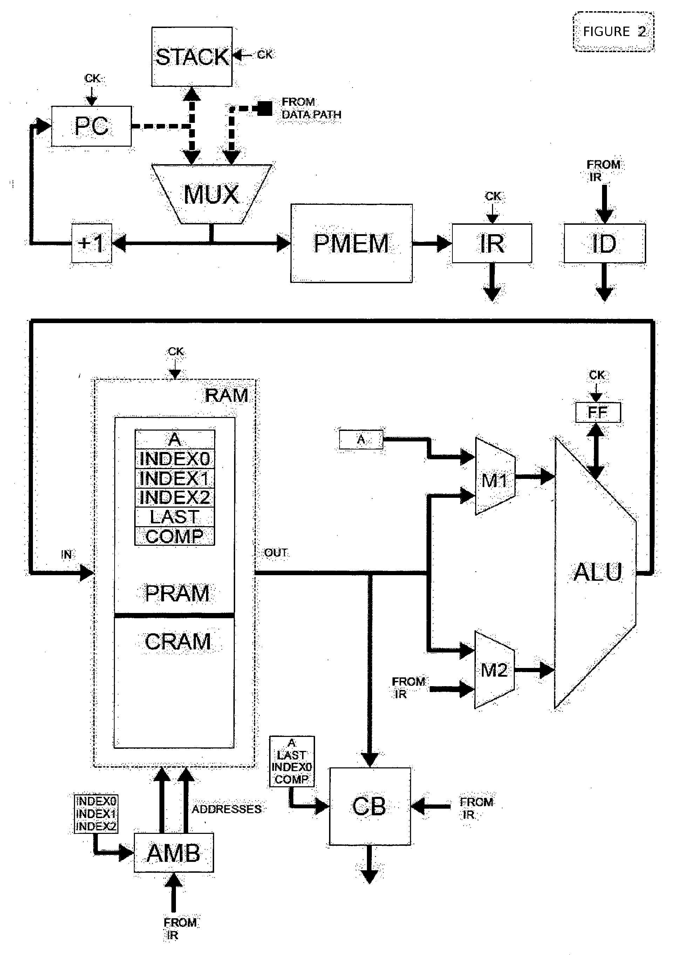

According to an embodiment, the processors have an architecture such as the one schematically represented in figure 2, in which the components for each processor are represented together with the PMEM block represented in the diagram, which corresponds to its own section of the program-memory and the PRAM and CRAM blocks which correspond to the data memory, i.e. the RAM vector seen by each processor.

Those processors are preferably of a RISC type, that is with a hardwired control and not with a micro-programmed control.

As far as figure 2 is concerned, for description purposes, the processors may be represented as structured in a control section and an operative section.

According to an embodiment, the control section of each processor as well as including the program memory (PMEM), is also made up of or comprises: the IR registers (Instruction Register) and PC (Program Counter), the incrementer, the selector of address bits (MUX) and the stack.

On each active edge of the CK clock signal, the processor is capable of update the PC register by loading the address of the latest instruction read increased by one, in order to read the next instruction from the program memory PMEM.

In the case of procedure call, the address value can be registered in the stack and recovered at the end of the procedure.

The MUX multiplexer is capable of choosing whether to access the program memory with the address saved in the PC, with the address saved in the stack or with the values given by the operative section in case of jump instructions.

With the active edge of the CK the IR register is capable of commuting and presenting the instruction read to the operative part.

The instruction is preferably composed of, or comprises, three fields, preferably an operative code field and two address fields, the latter preferably of 16 bits. The operative code field (opcode), will clearly be able to codify all possible types of instructions. The two address fields, for example from 16 bits, will be mostly necessary to store the address of source and destination locations or a numeric value used as immediate data or the instruction address and the condition used for the jump instructions.

According to an embodiment, besides the working memory (RAM), the operative section of each processor is made up of or comprises: the instruction decoder (ID), the calculation unit (ALU - Arithmetic Logic Unit), the multiplexers of operands (M1 e M2), the flip-flop of the flags of carry and overflow (FF), the conditional block (CB), the two blocks for the indirect access to the memory (AMB), the special operative registers included in RAM (A, LAST, COMP, INDEX0, INDEX1, INDEX2).

The operative section preferably contains one single vector of RAM memory locations. Preferably, the address space of this working memory is divided into two segments, if the address is in the first segment then access is made to the private RAM (PRAM) of the processor, if the address is in the second segment then access is made to the shared RAM (CRAM). For example, the first half of the RAM corresponds to the private RAM (PRAM) and the second half corresponds to the shared RAM (CRAM), the most significant bit (msb) of the address will decide which memory to access.

In each CK cycle, an element of data is read from the memory, the computation is executed through the ALU and the result is then written to the memory. The written value will be available in the subsequent CK cycle. Therefore the RAM is synchronous in writing, controlled by the general CK clock, and asynchronous in reading.

Although we have specifically referred to the CK clock cycle, instead of the clock cycle we could refer in general of the microcomputer working cycle intended as a cycle made up of the following operations: reading, computation, writing. Therefore, this working cycle is only preferably coinciding with the CK clock cycle.

As described in fig. 1, there are address lines and data lines (the line couples indicated with "Write" for writing and "Read" for reading) and there are no control signals for the writing and reading, the loading of data is checked by the CK clock signal. The REG lines in fig. 1 represent the direct connections from the special operation registers (A, INDEX0, INDEX1, INDEX2, LAST, COMP) in the private memories.

A fundamental feature of each processor and of the complete multiprocessor is that it doesn't include a shared communication bus between the various components (memories, processors, etc.). No bus of the type described above is adopted, but the working memory, that is the data memory, which has an access-port (Write) and an exit-port (Read by the RAM) for each processor. There are only dedicated direct connections between the processors and the memories and the data doesn't flow through any shared communication bus. In particular, there is a direct coupling between the memory and the calculation unit (ALU).

Therefore the elaboration occurs by reading a data element from the exit-port of the RAM and writing the result through the access-port during the same CK clock cycle, or working cycle. This is obtained through continuous paths solely defined by combinatorial logic circuit (see paths represented in figure 2) through which signals flow. For example, with reference to figure 2 some continuous combinatorial paths are:
IR > AMB > RAMout > M1 o M2 > ALU > RAMin,
IR > AMB > RAMout > CB > MUX > PMEM > IR,
IR > ID > ALU > MUX > PMEM > IR.

The times of the different parts are overlapped and optimized and the circuits are designed to be adapted and implemented with the modern dynamic logics (ex. domino logic).

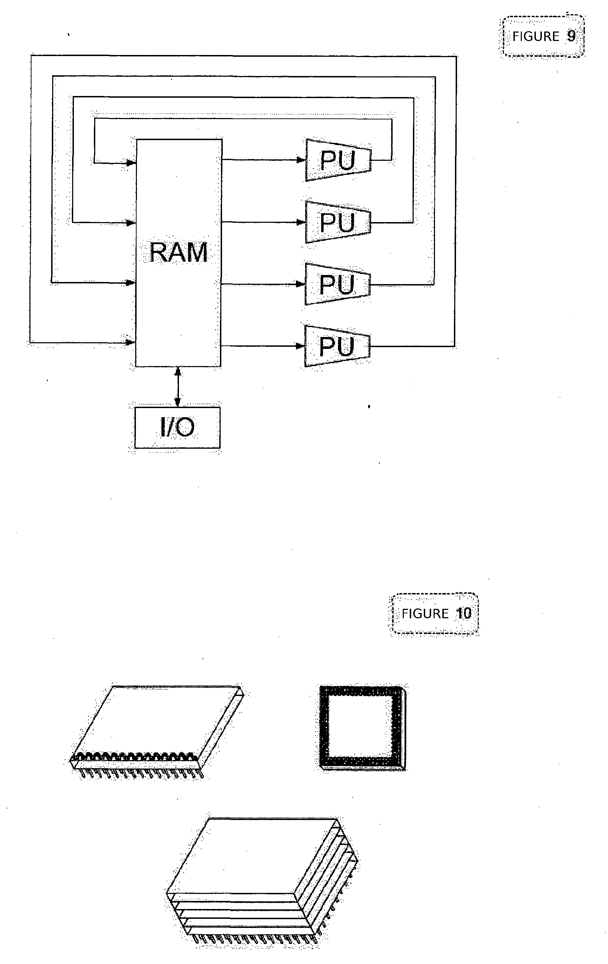

The multiprocessor microcomputer/microcontroller therefore is not based on modules connected through shared communication bus and that interact through them, as occurs in state of the technology art known, but can be represented as including one unique multiport memory with N reading ports and N writing port that are directly connected to N processing units (PU) that work in parallel, reading and writing directly on the memory. To better highlight this point of view in fig. 9 is shown this one-way cyclic model that we call "memocentric" (memory-centric or memory-centred) to contrast the architecture based on data communication bus or on network (in the literature called "bus-based" o "interconnect-centric"). The processing elements PU in fig. 9 correspond to the PM blocks (0..15) in fig. 1 including their own memories for the program (PMEM 0.15).

Nevertheless as it is absolutely neither convenient or necessary to use only shared locations as working memory, then we consider one part of the addresses of each processor as corresponding to private locations for each processor (PRAM in fig. 1).

According to an embodiment, from the point of view of the single processor the schematized architecture is the one shown in fig. 2.

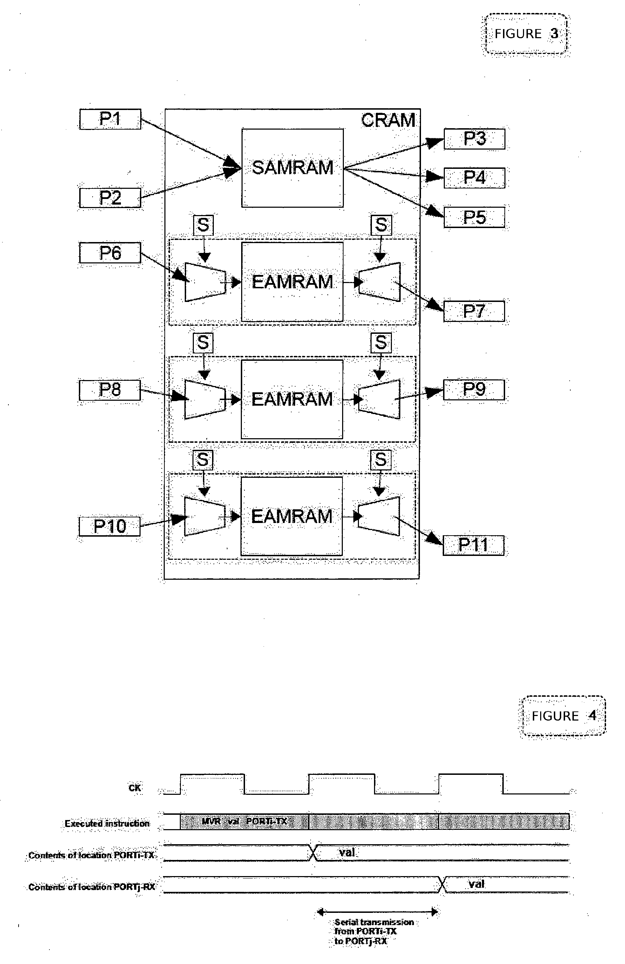

In addition, according to an embodiment the multiport shared RAM (CRAM) has a particular structure (as in fig. 3) that will subsequently be explained.

The instruction outgoing from the IR register will go to the instruction decoder (ID) which will generate control signals capable of handling the correct data flow and elaboration. Those signals are capable of controlling the data path, the interpretation of values in both 16 bit fields and the ALU operation for the execution of the type of instruction required.

The A register in the private RAM is the accumulator and the value contained therein can be used in the two operand operations together with a value taken from the memory. Therefore the element of data contained in A is taken from the memory (in which A is located), through a gate or a directly dedicated connection. At the same time there will be gates or direct connections from private RAMs for the COMP, LAST, INDEX0, INDEX1 and INDEX2 registers. These registers used in the operative area will be provided with their own memory address and will be accessible, and therefore readable and writable, as for any RAM location.

This unification of working memory and special processor registers is an original feature not found in other processor architecture and is preferably adopted because it has the advantage of simplifying the circuits and strengthening the set of instructions.

Preferably, an operative instruction that uses as operands, for example, the value in a source register Rs and the value in the accumulator A putting the result in a destination register Rd, will have its own specific operative code and will carry forward the Rs and Rd register address into the 16 bit fields. If on the other hand an operation is carried out with an outright value V (immediate value) and the value in a register R, subsequently entering the result in the same register R, then the instruction, will contain, together with the specific operational code, the value V and the address of R.

According to an embodiment, the standard operations can have one or two operands and all possible ways to indicate them are expected, both if contained in memory locations or as outright values limited to having two fields of 16 bits in the instruction and to being able to read one single memory location.

For example, for operative instruction with two operands (addition), four possible instruction are possible:

**ADDRAR Rs Rd corresponds to (Rs) + (A) =► (Rd),**

**ADDVAR V R corresponds to V + (A) =► (Rd),**

**ADDVRR V R corresponds to V + (R) =► (R),**

**ADDVRA V R corresponds to V + (R) =► (A).**

The CB conditional block is used, for example, in the jump instructions. In this case, with the specific operative code, the instruction indicates, in the 16 bit fields, the address to jump to in the program memory and the jump condition. This condition will indicate which register needs to be examined, whose value is derived from the RAM, and the operation to apply to it which is the test that needs to be verified for the jump to be executed.

According to an embodiment, the privileged RAM locations, which can be examined and therefore tested in the jump instructions, are the first 512 of the private memory, and the first 512 for the shared memory. This because, of the 16 bits of the field used for the condition, 10 bits are used to indicate the location to examine and 6 bits to indicate the function to be applied.

Some functions, for example, can be the selection of a specific bit or the comparison with the COMP register or the logic function OR, AND, XOR.

As well as directly accessing the value contained in a location, by indicating the address of the location in a field of instruction, an indirect access through the index registers (INDEX0, INDEX1, INDEX2) is possible.

By inserting a specific value in the field of instruction, the value included in the correspondent index register will be used as the address to access the RAM.

This management of the address is carried out independently by the AMB block circuits for the source and destination addresses.

Therefore if the instruction will indicate as the address three specific values INDIR0, INDIR1, INDIR2 then the value included respectively in INDEX0, INDEX1, INDEX2 will be used.

According to an embodiment, the register INDEX0 has one peculiarity: the automatic increment of the value contained in it is possible for each use for indirect access, this indicating a specific value INDIR0I.

The numbers INDIR0, INDIR1, INDIR2 and INDIR0I (that are preferably the numbers 0, 1, 2, e 3) are therefore for the indirect memory addressing.

LAST is a location in which the result of the last operation is always entered as well as writing to the destination register of the instruction.

COMP is used for comparisons in conditional tests.

The shared RAM is accessible within the same CK cycle from more processors at the same time in reading and writing without any arbitrage. If a number of processors read the same location they will obviously read the same value. If a number of processors try to write in the same CK cycle in the same location, then the function OR of the data to be written will be recorded in the location.

This will be called Simultaneous Access Multiport RAM (SAMRAM).

In alternative the shared RAM can be made up from more memory blocks: a RAM bank with simultaneous access and some simple RAM banks (double port) that can be connected to a processor for reading and to a processor for writing by means of two switches controlled by registers (S, contained in the SAMRAM) as represented in figure 3. I call these RAM banks Exclusive Access Multiport RAM (EAMRAM).

Therefore those EAMRAM blocks are double port memory with an port for reading and a port for writing that can be freely connected, through a software by setting up the switches for any processors, both for reading and for writing. It is enough to write in the location S, placed in the SAMRAM, to connect the corresponding port to any one of the processors.

With the locations of the simultaneous access RAM it is easy to implement some "semaphores" in order to manage any requirement for mutual exclusion and requirement for synchronization between processors.

For the implementation of the "semaphore" it is useful to combine the data that different processors want to write in the same location, with a function like the OR logic function. For example the processors proceed by setting different bits in the location which is used as a semaphore and then by testing the same location (by using specific instructions and due to the fact that the processors are synchronous and use a CK clock cycle for each instruction). It will then be possible to implement through a software, some binary semaphores, with a fixed or circular priority, counter semaphores, etc.

Some semaphore-locations of the SAMRAM, are used, as already specified, to govern the switches of the EAMRAM ports. The structure of the shared RAM according to fig. 3 will make available a large number of shared locations that could not otherwise be obtained in reality due to the current technical difficulty in building large memory multiport RAM.

In a EAMRAM block, writing is allowed for the enabled processors based on the semaphore-location for writing, the possible writing from others processors is instead lost. Reading is controlled by the processor which is enabled according to the read semaphore-location, while the other processors, if reading from the same block, will receive the same data.

Besides the EAMRAM version with semaphores described above other different multiport versions of blocks with exclusive access are available in the shared RAM structure.

For example, it is possible to use, even together the EAMRAM with semaphores, some EAMRAM with arbiters.

The EAMRAM with arbiters are blocks in which the access is managed by a circuit that automatically allocates the block access to a processor. The arbiter selects a processors based on a priority, this priority is determined by the value of a specific location and can be varied by changing the value in this location.

The management of the access through the arbiter is carried out separately for the writing and for the reading and occurs in each CK cycle.

Feedback waiting signals that block the processors are sent back to the processors that try to access the block memory, but whose access is not authorized.

The arbiter circuit receives the memory bank access requests that correspond to the presence of its bank address in the one provided by the processors. The arbiters, according to the priority determined by the control location, forward signals to the memory bank and generate blocking signals of the processors.

Therefore the processors that try and write to the memory bank or read from it, in the of presence of an analogous writing or reading from a processor with a higher priority, are blocked until the arbiter assign them access.

According to an embodiment, the instructions set of the microcontroller includes the following assembly language instructions:

**SET OF INSTRUCTIONS (ASSEMBLY LANGUAGE)**

| <1><2> | | | | | |
|---|---|---|---|---|---|
| Operative instructions with two operands: | | | | | |
| ADDRAR | Rs | [Rd] | (Rs) + (A) | --> | (Rd) |
| ADDVAR | V | R | V + (A) | --> | (R) |
| ADDVRR | V | R | V + (R) | --> | (R) |
| ADDVRA | V | R | V + (R) | --> | (A) |
| | | | | | |
| SUBRAR | Rs | [Rd] | (Rs) - (A) | --> | (Rd) |
| SUBVAR | V | R | V - (A) | --> | (R) |
| SUBVRR | V | R | V - (R) | --> | (R) |
| SUBVRA | V | R | V - (R) | --> | (A) |
| | | | | | |
| ADCRAR | Rs | [Rd] | (Rs) + (A) + cy | --> | (Rd) |
| ADCVAR | V | R | V + (A) + cy | --> | (R) |
| ADCVRR | V | R | V + (R) + cy | --> | (R) |
| ADCVRA | V | R | V + (R) + cy | --> | (A) |
| | | | | | |
| SBCRAR | Rs | [Rd] | (Rs) - (A) - cy | --> | (Rd) |
| SBCVAR | V | R | V - (A) - cy | --> | (R) |
| SBCVRR | V | R | V - (R) - cy | --> | (R) |
| SBCVRA | V | R | V - (R) - cy | --> | (A) |
| | | | | | |
| SBIRAR | Rs | [Rd] | (A) - (Rs) | --> | (Rd) |
| SICRAR | Rs | [Rd] | (A) - (Rs) - cy | --> | (Rd) |
| | | | | | |
| ORRAR | Rs | [Rd] | (Rs) or (A) | --> | (Rd) |
| ORVAR | V | R | V or (A) | --> | (R) |
| ORVRR | V | R | V or (R) | --> | (R) |
| ORVRA | V | R | V or (R) | --> | (A) |
| | | | | | |
| ANDRAR | Rs | [Rd] | (Rs) and (A) | --> | (Rd) |
| ANDVAR | V | R | V and (A) | --> | (R) |
| ANDVRR | V | R | V and (R) | --> | (R) |
| ANDVRA | V | R | V and (R) | --> | (A) |
| | | | | | |
| XORRAR | Rs | [Rd] | (Rs) xor (A) | --> | (Rd) |
| XORVAR | V | R | V xor (A) | --> | (R) |
| XORVRR | V | R | V xor (R) | --> | (R) |
| XORVRA | V | R | V xor (R) | --> | (A) |

| <3> | | | | | |
|---|---|---|---|---|---|
| MULRAR | Rs | [Rd] | (Rs) _{7_0} X (A) _{7_0} | --> | (Rd) |
| MULVAR | V | R | V_{7_0} X (A) _{7_0} | --> | (R) |
| MULVRR | V | R | V_{7_0} X (R) _{7_0} | --> | (R) |
| MULVRA | V | R | V_{7_0} X (R)_{7_0} | --> | (A) |

| <4> | | | | | |
|---|---|---|---|---|---|
| Operative instructions with one operand: | | | | | |
| MRR | Rs | Rd | (Rs) | --> | (Rd) |
| MVR | V | R | V | --> | (R) |
| | | | | | |
| ROL | Rs | [Rd] | rol(Rs) | --> | (Rd) |
| ROR | Rs | [Rd] | ror(Rs) | --> | (Rd) |
| RCL | Rs | [Rd] | rcl(Rs) | --> | (Rd) |
| RCR | Rs | [Rd] | rcr(Rs) | --> | (Rd) |
| SHL | Rs | [Rd] | shl(Rs) | --> | (Rd) |
| SHR | Rs | [Rd] | shr(Rs) | --> | (Rd) |
| SAR | Rs | [Rd] | sar(Rs) | --> | (Rd) |
| SWP | Rs | [Rd] | swp(Rs) | --> | (Rd) |
| | | | | | |
| INC | Rs | [Rd] | (Rs) + 1 | --> | (Rd) |
| DEC | Rs | [Rd] | (Rs) - 1 | --> | (Rd) |
| NEG | Rs | [Rd] | 0 - (Rs) | --> | (Rd) |
| NOT | Rs | [Rd] | not(Rs) | --> | (Rd) |
| | | | | | |
| REV | Rs | [Rd] | bit_reversed(Rs) | --> | (Rd) |
| XCG | Rs | [Rd] | (A) --> (Rd), | (Rs) --> (A) | |

| <5> | | | | | |
|---|---|---|---|---|---|
| Instructions for synchronizations and control: | | | | | |
| HZR | Rs | Rd | (Rs) {wait if (Rs) = 0} | --> | (Rd) |
| HNZW | V | R | V {wait if (R) ≠ 0} | --> | (R) |

| <6><7><8> | | | | | |
|---|---|---|---|---|---|
| Jump instructions: | | | | | |
| JMP | N | [O F P] | conditioned jump (N --> PC if F[(O)] = P) | | |
| JINC | N | O F P | " " with increment of (O) | | |
| JDEC | N | O F P | " " with increment of (O) | | |
| JTAB | N | [O F P] | " " using table | | |
| | | | | | |
| JRA | N | R | unconditioned jump with (R) --> (A) | | |
| JVA | N | V | " " with V --> (A) | | |
| JRL | N | R | " " with (R) --> (LAST) | | |
| JVL | N | V | " " with V --> (LAST) | | |

| Conditioned operative instructions: | | | | | <9><10> |
|---|---|---|---|---|---|
| TADD | R | [T F P] | (R) + (A) | --> | (R) |
| TADD, k | R | [T F P] | (R) + k | --> | (R) |
| | | | | | |
| TSUB | R | [T F P] | (R) - (A) | --> | (R) |
| TSUB, k | R | [T F P] | (R) - k | --> | (R) |
| | | | | | |
| TADC | R | [T F P] | (R) + (A) + cy | --> | (R) |
| TADC, k | R | [T F P] | (R) + k + cy | --> | (R) |
| | | | | | |
| TSBC | R | [T F P] | (R) - (A) - cy | --> | (R) |
| TSBC, k | R | [T F P] | (R) - k - cy | --> | (R) |
| | | | | | |
| TOR | R | [T F P] | (R) or (A) | --> | (R) |
| TOR, k | R | [T F P] | (R) or k | --> | (R) |
| | | | | | |
| TAND | R | [T F P] | (R) and (A) | --> | (R) |
| TAND, k | R | [T F P] | (R) and k | --> | (R) |
| | | | | | |
| TXOR | R | [T F P] | (R) xor (A) | --> | (R) |
| TXOR, k | R | [T F P] | (R) xor k | --> | (R) |
| | | | | | |
| TMUL | R | [T F P] | (R) X (A) | --> | (R) |
| TMUL, k | R | [T F P] | (R) X k | --> | (R) |
| | | | | | |
| TROR | R | [T F P] | rotation to the right of (A) bit | | |
| TROR, k | R | [T F P] | rotation to the right of k bit | | |
| | | | | | |
| TSHL | R | [T F P] | scroll to the left of (A) _{3_0} bit | | |
| TSHL, k | R | [T F P] | scroll to the left of k bit | | |
| | | | | | |
| TSHR | R | [T F P] | scroll to the right of (A) _{3_0} bit | | |
| TSHR, k | R | [T F P] | scroll to the right of k bit | | |
| | | | | | |
| TSAR | R | [T F P] | arithmetic scroll of (A) _{3_0} bit | | |
| TSAR, k | R | [T F P] | arithmetic scroll of k bit | | |
| | | | | | |
| TSET | R | [T F P] | set of the position bit (A) _{3_0} | | |
| TSET, k | R | [T F P] | set of the position bit k | | |
| | | | | | |
| TRST | R | [T F P] | reset of the position bit (A) _{3_0} | | |
| TRST, k | R | [T F P] | reset of the position bit k | | |
| | | | | | |
| TINV | R | [T F P] | inversion of the position bit (A) _{3_0} | | |
| TINV, k | R | [T F P] | inversion of the position bit k | | |
| | | | | | |
| TMAR | R | [T F P] | (A) | --> | (R) |
| TMAR, k | R | [T F P] | k | --> | (R) |

| Iterative operative instructions: | | | | | |
|---|---|---|---|---|---|
| IADD | R | [T F P] | (R) + (A) | --> | (R) |
| IADD, k | R | [T F P] | (R) + k | --> | (R) |
| | | | | | |
| ISUB | R | [T F P] | (R) - (A) | --> | (R) |
| ISUB, k | R | [T F P] | (R) - k | --> | (R) |
| | | | | | |
| IADC | R | [T F P] | (R) + (A) + cy | --> | (R) |
| IADC, k | R | [T F P] | (R) + k + cy | --> | (R) |
| | | | | | |
| ISBC | R | [T F P] | (R) - (A) - cy | --> | (R) |
| ISBC, k | R | [T F P] | (R) - k - cy | --> | (R) |
| | | | | | |
| IOR | R | [T F P] | (R) or (A) | --> | (R) |
| IOR, k | R | [T F P] | (R) or k | --> | (R) |
| | | | | | |
| IAND | R | [T F P] | (R) and (A) | --> | (R) |
| IAND, k | R | [T F P] | (R) and k | --> | (R) |
| | | | | | |
| IXOR | R | [T F P] | (R) xor (A) | --> | (R) |
| IXOR, k | R | [T F P] | (R) xor k | --> | (R) |
| | | | | | |
| IMUL | R | [T F P] | (R) X (A) | --> | (R) |
| IMUL, k | R | [T F P] | (R) X k | --> | (R) |
| | | | | | |
| IROR | R | [T F P] | rotation to the right of (A) bit | | |
| IROR, k | R | [T F P] | rotation to the right of k bit | | |
| | | | | | |
| ISHL | R | [T F P] | rotation to the left of (A) _{3_0} bit | | |
| ISHL, k | R | [T F P] | rotation to the left of k bit | | |
| | | | | | |
| ISHR | R | [T F P] | rotation to the right of (A) _{3_0} bit | | |
| ISHR, k | R | [T F P] | rotation to the right of k bit | | |
| | | | | | |
| ISAR | R | [T F P] | arithmetic scroll of (A) _{3_0} bit | | |
| ISAR, k | R | [T F P] | arithmetic scroll of k bit | | |
| | | | | | |
| ISET | R | [T F P] | set of the position bit (A) _{3_0} | | |
| ISET, k | R | [T F P] | set of the position bit k | | |
| | | | | | |
| IRST | R | [T F P] | reset of the position bit (A) _{3_0} | | |
| IRST, k | R | [T F P] | reset of the position bit k | | |
| | | | | | |
| IINV | R | [T F P] | inversion of the position bit (A) _{3_0} | | |
| IINV, k | R | [T F P] | inversion of the position bit | | k |
| | | | | | |
| IMAR | R | [T F P] | (A) | --> | (R) |
| IMAR, k | R | [T F P] | k | --> | (R) |

| Conditioned operative instructions with result in A: | | | | | |
|---|---|---|---|---|---|
| TADDA | R | [T F P] | (R) + (A) | --> | (A) |
| TADDA, k | R | [T F P] | (R) + k | --> | (A) |
| | | | | | |
| TSUBA | R | [T F P] | (R) - (A) | --> | (A) |
| TSUBA, k | R | [T F P] | (R) - k | --> | (A) |
| | | | | | |
| TADCA | R | [T F P] | (R) + (A) + cy | --> | (A) |
| TADCA, k | R | [T F P] | (R) + k + cy | --> | (A) |
| | | | | | |
| TSBCA | R | [T F P] | (R) - (A) - cy | --> | (A) |
| TSBCA, k | R | [T F P] | (R) - k - cy | --> | (A) |
| | | | | | |
| TORA | R | [T F P] | (R) or (A) | --> | (A) |
| TORA, k | R | [T F P] | (R) or k | --> | (A) |
| | | | | | |
| TANDA | R | [T F P] | (R) and (A) | --> | (A) |
| TANDA, k | R | [T F P] | (R) and k | --> | (A) |
| | | | | | |
| TXORA | R | [T F P] | (R) xor (A) | --> | (A) |
| TXORA, k | R | [T F P] | (R) xor k | --> | (A) |
| | | | | | |
| TMULA | R | [T F P] | (R) X (A) | --> | (A) |
| TMULA, k | R | [T F P] | (R) X k | --> | (A) |
| | | | | | |
| TRORA | R | [T F P] | rotation to the right of (A) bit | | |
| TRORA, k | R | [T F P] | rotation to the right of k bit | | |
| | | | | | |
| TSHLA | R | [T F P] | scroll to the left of (A) _{3_0} bit | | |
| TSHLA, k | R | [T F P] | scroll to the left of k bit | | |
| | | | | | |
| TSHRA | R | [T F P] | scroll to the right of (A) _{3_0} bit | | |
| TSHRA, k | R | [T F P] | scroll to the right of k bit | | |
| | | | | | |
| TSARA | R | [T F P] | arithmetic scroll of (A) _{3_0} bit | | |
| TSARA, k | R | [T F P] | arithmetic scroll of k bit | | |
| | | | | | |
| TSETA | R | [T F P] | set of the position bit (A) _{3_0} | | |
| TSETA, k | R | [T F P] | set of the position bit k | | |
| | | | | | |
| TRSTA | R | [T F P] | reset of the position bit (A) _{3_0} | | |
| TRSTA, k | R | [T F P] | reset of the position bit k | | |
| | | | | | |
| TINVA | R | [T F P] | inversion of the position bit (A) _{3_0} | | |
| TINVA, k | R | [T F P] | inversion of the position bit | | k |
| | | | | | |
| TMRA | R | [T F P] | (R) | --> | (A) |
| TMRA, k | R | [T F P] | k | --> | (A) |

| <11> | | | | | |
|---|---|---|---|---|---|
| Two operands operative instructions, with return: | | | | | |
| ADDRAR/ | Rs | [Rd] | (Rs) + (A) | --> | (Rd) |
| ADDVAR/ | V | R | V + (A) | --> | (R) |
| ADDVRR/ | V | R | V + (R) | --> | (R) |
| ADDVRA/ | V | R | V + (R) | --> | (A) |
| | | | | | |
| SUBRAR/ | Rs | [Rd] | (Rs) - (A) | --> | (Rd) |
| SUBVAR/ | V | R | V - (A) | --> | (R) |
| SUBVRR/ | V | R | V - (R) | --> | (R) |
| SUBVRA/ | V | R | V - (R) | --> | (A) |
| | | | | | |
| ADCRAR/ | Rs | [Rd] | (Rs) + (A) + cy | --> | (Rd) |
| ADCVAR/ | V | R | V + (A) + cy | --> | (R) |
| ADCVRR/ | V | R | V + (R) + cy | --> | (R) |
| ADCVRA/ | V | R | V + (R) + cy | --> | (A) |
| | | | | | |
| SBCRAR/ | Rs | [Rd] | (Rs) - (A) - cy | --> | (Rd) |
| SBCVAR/ | V | R | V - (A) - cy | --> | (R) |
| SBCVRR/ | V | R | V - (R) - cy | --> | (R) |
| SBCVRA/ | V | R | V - (R) - cy | --> | (A) |
| SBIRAR/ | Rs | [Rd] | (A) - (Rs) | --> | (Rd) |
| SICRAR/ | Rs | [Rd] | (A) - (Rs) - cy | --> | (Rd) |
| | | | | | |
| ORRAR/ | Rs | [Rd] | (Rs) or (A) | --> | (Rd) |
| ORVAR/ | V | R | V or (A) | --> | (R) |
| ORVRR/ | V | R | V or (R) | --> | (R) |
| ORVRA/ | V | R | V or (R) | --> | (A) |
| | | | | | |
| ANDRAR/ | Rs | [Rd] | (Rs) and (A) | --> | (Rd) |
| ANDVAR/ | V | R | V and (A) | --> | (R) |
| ANDVRR/ | V | R | V and (R) | --> | (R) |
| ANDVRA/ | V | R | V and (R) | --> | (A) |
| | | | | | |
| XORRAR/ | Rs | [Rd] | (Rs) xor (A) | --> | (Rd) |
| XORVAR/ | V | R | V xor (A) | --> | (R) |
| XORVRR/ | V | R | V xor (R) | --> | (R) |
| XORVRA/ | V | R | V xor (R) | --> | (A) |
| | | | | | |
| MULRAR/ | Rs | [Rd] | (Rs) X (A) | --> | (Rd) |
| MULVAR/ | V | R | V X (A) | --> | (R) |
| MULVRR/ | V | R | V X (R) | --> | (R) |
| MULVRA/ | V | R | V X (R) | --> | (A) |

| One operand operative instruction, with return: | | | | | |
|---|---|---|---|---|---|
| MRR/ | Rs | Rd | (Rs) | --> | (Rd) |
| MVR/ | V | R | V | --> | (R) |
| | | | | | |
| ROL/ | Rs | [Rd] | rol(Rs) | --> | (Rd) |
| ROR/ | Rs | [Rd] | ror(Rs) | --> | (Rd) |
| RCL/ | Rs | [Rd] | rcl(Rs) | --> | (Rd) |
| RCR/ | Rs | [Rd] | rcr(Rs) | --> | (Rd) |
| | | | | | |
| SHL/ | Rs | [Rd] | shl(Rs) | --> | (Rd) |
| SHR/ | Rs | [Rd] | shr(Rs) | --> | (Rd) |
| SAR/ | Rs | [Rd] | sar(Rs) | --> | (Rd) |
| SWP/ | Rs | [Rd] | swp(Rs) | --> | (Rd) |
| | | | | | |
| INC/ | Rs | [Rd] | (Rs) + 1 | --> | (Rd) |
| DEC/ | Rs | [Rd] | (Rs) - 1 | --> | (Rd) |
| NEG/ | Rs | [Rd] | 0 - (Rs) | --> | (Rd) |
| NOT/ | Rs | [Rd] | not(Rs) | --> | (Rd) |
| | | | | | |
| REV/ | Rs | [Rd] | bit_reversed(Rs) | --> | (Rd) |
| XCG/ | Rs | [Rd] | (A) --> (Rd), | (Rs) --> (A) | |
| | | | | | |
| Synchronization and control instructions with return: | | | | | |
| HZR/ | Rs | Rd | (Rs) _{{wait if (Rs) = 0}} | --> | (Rd) |
| HNZW/ | V | R | V _{{walt If (R) ≠ 0}} | --> | (R) |
| <12> | | | | | |
| Instructions for a procedure call: | | | | | |
| CALL | N | [O F P] | conditioned call | | |
| CINC | N | 0 F P | " " with increment of (O) | | |
| CDEC | N | 0 F P | " " with decrease of (O) | | |
| CTAB | N | [O F P] | " " using table | | |
| | | | | | |
| CRA | N | R | unconditioned call with (R) --> (A) | | |
| CVA | N | V | " " with V --> (A) | | |
| CRL | N | R | " " with (R) --> (LAST) | | |
| CVL | N | V | " " with V --> (LAST) | | |
| Conditioned operative instructions, with return: | | | | | |
| TADD/ | R | [T F P] | (R) + (A) | --> | (R) |
| TADD/, k | R | [T F P] | (R) + k | --> | (R) |
| | | | | | |
| TSUB/ | R | [T F P] | (R) - (A) | --> | (R) |
| TSUB/, k | R | [T F P] | (R) - k | --> | (R) |
| | | | | | |
| TADC/ | R | [T F P] | (R) + (A) + cy | --> | (R) |
| TADC/, k | R | [T F P] | (R) + k + cy | --> | (R) |
| | | | | | |
| TSBC/ | R | [T F P] | (R) - (A) - cy | --> | (R) |
| TSBC/, k | R | [T F P] | (R) - k - cy | --> | (R) |
| | | | | | |
| TOR/ | R | [T F P] | (R) or (A) | --> | (R) |
| TOR/, k | R | [T F P] | (R) or k | --> | (R) |
| | | | | | |
| TAND/ | R | [T F P] | (R) and (A) | --> | (R) |
| TAND/, k | R | [T F P] | (R) and k | --> | (R) |
| | | | | | |
| TXOR/ | R | [T F P] | (R) xor (A) | --> | (R) |
| TXOR/, k | R | [T F P] | (R) xor k | --> | (R) |
| | | | | | |
| TMUL/ | R | [T F P] | (R) X (A) | --> | (R) |
| TMUL/, k | R | [T F P] | (R) X k | --> | (R) |
| | | | | | |
| TROR/ | R | [T F P] | rotation to the right of (A) bit | | |
| TROR/, k | R | [T F P] | rotation to the right of k bit | | |
| | | | | | |
| TSHL/ | R | [T F P] | scroll to the left of (A) _{3_0} bit | | |
| TSHL/, k | R | [T F P] | scroll to the left of k bit | | |
| | | | | | |
| TSHR/ | R | [T F P] | scroll to the right of (A) _{3_0} bit | | |
| TSHR/, k | R | [T F P] | scroll to the right of k bit | | |
| | | | | | |
| TSAR/ | R | [T F P] | arithmetic scroll of (A) _{3_0} bit | | |
| TSAR/, k | R | [T F P] | arithmetic scroll of k bit | | |
| | | | | | |
| TSET/ | R | [T F P] | set of the position bit (A) _{3_0} | | |
| TSET/, k | R | [T F P] | set of the position bit k | | |
| | | | | | |
| TRST/ | R | [T F P] | reset of the position bit (A) _{3_0} | | |
| TRST/, k | R | [T F P] | reset of the position bit k | | |
| | | | | | |
| TINV/ | R | [T F P] | inversion of the position bit | | (A) _{3_0} |
| TINV/, k | R | [T F P] | inversion of the position bit | | k |
| | | | | | |
| TMAR/ | R | [T F P] | (A) | --> | (R) |
| TMAR/, k | R | [T F P] | k | --> | (R) |
| Iterative operative instructions, with return: | | | | | |
| IADD/ | R | [T F P] | (R) + (A) | --> | (R) |
| IADD/, k | R | [T F P] | (R) + k | --> | (R) |
| | | | | | |
| ISUB/ | R | [T F P] | (R) - (A) | --> | (R) |
| ISUB/, k | R | [T F P] | (R) - k | --> | (R) |
| | | | | | |
| IADC/ | R | [T F P] | (R) + (A) + cy | --> | (R) |
| IADC/, k | R | [T F P] | (R) + k + cy | --> | (R) |
| | | | | | |
| ISBC/ | R | [T F P] | (R) - (A) - cy | --> | (R) |
| ISBC/, k | R | [T F P] | (R) - k - cy | --> | (R) |
| | | | | | |
| IOR/ | R | [T F P] | (R) or (A) | --> | (R) |
| IOR/, k | R | [T F P] | (R) or k | --> | (R) |
| | | | | | |
| IAND/ | R | [T F P] | (R) and (A) | --> | (R) |
| IAND/, k | R | [T F P] | (R) and k | --> | (R) |
| | | | | | |
| IXOR/ | R | [T F P] | (R) xor (A) | --> | (R) |
| IXOR/, k | R | [T F P] | (R) xor k | --> | (R) |
| | | | | | |
| IMUL/ | R | [T F P] | (R) X (A) | --> | (R) |
| IMUL/, k | R | [T F P] | (R) X k | --> | (R) |
| | | | | | |
| IROR/ | R | [T F P] | rotation to the right of (A) bit | | |
| IROR/, k | R | [T F P] | rotation to the right of k bit | | |
| | | | | | |
| ISHL/ | R | [T F P] | scroll to the left of (A) _{3_0} bit | | |
| ISHL/, k | R | [T F P] | scroll to the left of k bit | | |
| | | | | | |
| ISHR/ | R | [T F P] | scroll to the right of (A) _{3_0} bit | | |
| ISHR/, k | R | [T F P] | scroll to the right of k bit | | |
| | | | | | |
| ISAR/ | R | [T F P] | arithmetic scroll of (A) _{3_0} bit | | |
| ISAR/, k | R | [T F P] | arithmetic scroll of k bit | | |
| | | | | | |
| ISET/ | R | [T F P] | set of the position bit (A) _{3_0} | | |
| ISET/, k | R | [T F P] | set of the position bit k | | |
| | | | | | |
| IRST/ | R | [T F P] | reset of the position bit (A) _{3_0} | | |
| IRST/, k | R | [T F P] | reset of the position bit k | | |
| | | | | | |
| IINV/ | R | [T F P] | inversion of the position bit (A) _{3_0} | | |
| IINV/, k | R | [T F P] | inversion of the position k | | |
| | | | | | |
| IMAR/ | R | [T F P] | (A) | --> | (R) |
| IMAR/, k | R | [T F P] | k | --> | (R) |
| Conditioned operative instructions with result in A and return: | | | | | |
| TADDA/ | R | [T F P] | (R) + (A) | --> | (A) |
| TADDA/, k | R | [T F P] | (R) + k | --> | (A) |
| | | | | | |
| TSUBA/ | R | [T F P] | (R) - (A) | --> | (A) |
| TSUBA/, k | R | [T F P] | (R) - k | --> | (A) |
| | | | | | |
| TADCA/ | R | [T F P] | (R) + (A) + cy | --> | (A) |
| TADCA/, k | R | [T F P] | (R) + k + cy | --> | (A) |
| | | | | | |
| TSBCA/ | R | [T F P] | (R) - (A) - cy | --> | (A) |
| TSBCA/, k | R | [T F P] | (R) - k - cy | --> | (A) |
| | | | | | |
| TORA/ | R | [T F P] | (R) or (A) | --> | (A) |
| TORA/, k | R | [T F P] | (R) or k | --> | (A) |
| | | | | | |
| TANDA/ | R | [T F P] | (R) and (A) | --> | (A) |
| TANDA/, k | R | [T F P] | (R) and k | --> | (A) |
| | | | | | |
| TXORA/ | R | [T F P] | (R) xor (A) | --> | (A) |
| TXORA/, k | R | [T F P] | (R) xor k | --> | (A) |
| | | | | | |
| TMULA/ | R | [T F P] | (R) X (A) | --> | (A) |
| TMULA/, k | R | [T F P] | (R) X k | --> | (A) |
| | | | | | |
| TRORA/ | R | [T F P] | rotation to the right of (A) bit | | |
| TRORA/, k | R | [T F P] | rotation to the right of k bit | | |
| | | | | | |
| TSHLA/ | R | [T F P] | scroll to the left of (A) _{3_0} bit | | |
| TSHLA/, k | R | [T F P] | scroll to the left of k bit | | |
| | | | | | |
| TSHRA/ | R | [T F P] | scroll to the right of (A) _{3_0} bit | | |
| TSHRA/, k | R | [T F P] | scroll to the right of k bit | | |
| | | | | | |
| TSARA/ | R | [T F P] | arithmetic scroll of (A) _{3_0} bit | | |
| TSARA/, k | R | [T F P] | arithmetic scroll of k bit | | |
| | | | | | |
| TSETA/ | R | [T F P] | set of the position bit (A) _{3_0} | | |
| TSETA/, k | R | [T F P] | set of the position bit k | | |
| | | | | | |
| TRSTA/ | R | [T F P] | reset of the position bit (A) _{3_0} | | |
| TRSTA/, k | R | [T F P] | reset of the position bit k | | |
| | | | | | |
| TINVA/ | R | [T F P] | inversion of the position bit (A) _{3_0} | | |
| TINVA/, k | R | [T F P] | inversion of the position bit | | k |
| | | | | | |
| TMRA/ | R | [T F P] | (R) | --> | (A) |
| TMRA/, k | R | [T F P] | k | --> | (A) |

| | | | | | <13> |
|---|---|---|---|---|---|
| Pseudo-instructions: | | | | | |
| CLR | R | | 0 | --> | (R) |
| *corresponding* | *to* | | | | |
| *MVR* | *0* | *R* | | | |
| NOP | | | no operation | | |
| *corresponding* | *to* | | | | |
| *MRR* | *LAST* | *LAST* | | | |
| STOP | | | stop of the processor | | |
| *corresponding* | *to* | | | | |
| *IMAR* | *LAST* | | | | |
| | Pseudo-instructions, | with | return: | | |
| CLR/ | R | | 0 | --> | (R) |
| *corresponding* | *to* | | | | |
| *MVR*/ | *0* | *R* | | | |
| NOP/ | | | no operation | | |
| *corresponding* | *to* | | | | |
| *MRR*/ | *LAST* | *LAST* | | | |

### Interpretative notes to the above indicated instruction:

<1>: Round brackets around a symbol/value in the explanation of the calculation indicate that the value contained in the location, with address equal to the symbol/value, is used, or rather if with R we refer to a number, that will often correspond the R register address, then with "(R)" we refer to the value contained in the location whose address is R.
<2>:
   The square brackets in the instructions indicate that the part can be implied.
   If Rd is not indicated then it can be taken that Rd = Rs.
   If a conditioned jump doesn't have the conditioned part, it can be taken that the condition is always verified.
<3>:
   Multiplications are carried out considering the least significant 8 bits of the operands, the result will be at 16 bits.
   The notation x_y indicates the selection of the bits only from the position x to the position y.
<4>:
   rol = rotation to the left
   (Rs) <<1 --> (Rd), (RS) ₁₅ --> (Rd)o, (Rs) ₁₅ --> cy
   ror = rotation to the right
   (Rs) >>1 --> (Rd), (Rs) ₀ --> (Rd) ₁₅, (Rs) ₀ --> cy
   rcl = rotation to the left via carry
   (Rs) <<1 --> (Rd), (Rs) ₁₅ --> cy, cy --> (Rs) ₀
   rcr = rotation to the right via carry
   (Rs) >>1 --> (Rd), (Rs) ₀ --> cy, cy --> (Rs) ₁₅
   shl = logic scroll to the left
   (Rs) <<1 --> (Rd), 0 --> (Rd) ₀, (Rs) ₁₅ --> cy
   shr = logic scroll to the right
   (Rs) >>1 --> (Rd), 0 --> (Rd) ₁₅, (Rs) ₀ --> cy
   sar = arithmetic scroll to the right
   (Rs) >>1 --> (Rd), (Rs) ₁₅ --> (Rd) ₁₅, (Rs) ₀ --> cy
   swp = swap between the low byte and the high byte
   (Rs)_{15_8} --> (Rd) _{7_0}, (Rs) _{7_0} --> (Rd) _{15_8}
<5>:
   The instruction HZR (Halt if Zero on location to Read) suspends writing and halts the processor if RS contains a null value and the processor remains in suspension until the value in RS becomes different from zero.
   The instruction HNZW (Halt if Not Zero on location to Write) suspends writing and halts the processor if R contains a non null value and the processor stays in suspension until the value in R becomes equal to zero.
<6>:
   O indicates the location to observe.
   O: from 0 to 511 and from 32768 to 33279,
   that is from 0h to 1FFh and from 8000h to 81FFh (x000000xxxxxxxxx).
   F indicates the function to evaluate.
   F: from 0 a 15 (selection of the correspondent position bit),
   OR (or function among all bits),
   AND (and function among all bits),
   XOR (xor function among all bits),
   OROFAND (or function of the and function bit a bit between O e COMP),
   ANDOFOR (and function of the or function bit a bit between O e COMP),
   EQU, SUP, INF (comparisons between O and COMP),
   USUP, UINF (comparisons between O and COMP, in absolute values),
   POS (positive value into O, (O) > O),
   IS1 (value into O equal to 1, (O) = 1),
   CY (selection of the carry bit),
   OW (selection of the overflow bit),
   PBIT (selection of the external bit PBIT associated to the processor, that is the PORTA register bit position equal to the number of the processor),
   H (always 1).
   P indicates the polarity:
   the test is verified if the function is equal to P.
<7>:
   JINC, JDEC: the value in O is automatically increased or decreased after the test.
<8>:
   JTAB: N is the base address of the table, A contains the index of the table. Jump to the address, N + (A).
<9>:
   T indicates to which register the test is to be applied.
   T: R, A, I, L
   (R = register read, A = accumulator, I = INDEX0, L = LAST).
<10>:
   If the parameter K is specified, in the instruction, instead of value in A the parameter is used.
   k: from 1 to 15 (if k is 0 then it is used (A)).
<11>:
   The instructions with return from procedure can have the mnemonic code ending either with "/" or with "/RET" indifferently.
<12>:
   The procedure call instructions are equivalent to the jump instructions with the addition of save in the stack address of the following instruction.
<13>:
   Instructions not present in machine language but recognized by the assembler that translates them into equivalent instructions.

According to a particularly preferred embodiment, that constitutes in such embodiment a peculiar feature of the invention, is that an instruction type RET/RETURN to carry out the return from procedure is not foreseen. Instead the operative instructions have been duplicated contemplating for each operative instruction a further version with a simultaneous return from procedure.

Preferably, a bit of operative code indicates if the operative instruction is with simultaneous return from procedure or not. The same bit indicates if the jump instruction is a simple jump or a procedure call.

Another feature that can be expected is that conditioned operative instructions are present, that is instructions are carried out if the condition present in the instruction is verified and iterative operative instructions are present, that is instructions that are carried out repeatedly until the condition in the instruction is verified.

The generic input and output ports of the microcontroller (I/O), for the external communication, are connected to shared RAM locations, preferably in the SAMRAM.

Due to the way the processor architecture is designed (fig. 2), any instruction (even a completed jump instruction) always and only requires one single CK clock cycle.

As already stated, in every CK clock cycle there is a reading and a writing of the RAM and it is the addresses that determine the involved locations without using control signals.

This architecture of the processors and of the microprocessor microcomputer is also particularly suitable to be used in system-on-chip (SoC) and in macro-systems to work together with other digital circuits of RTL level (Register Transfer Level).

According to an embodiment the microcontroller also has a certain number of serial ports (for example 16).

These serial ports consist of shared RAM locations to which are connected serial transceivers which have, precisely, the double function of transmitting or receiving a 16 bit data along a single line in serially.

As soon as the data is loaded in the register, the transceiver activates itself and sends it in a serially to the exit line. On the other hand, if the port is of receiving type, when the reception of a data is completed, this, on the following CK active front, is then loaded in the connected register.

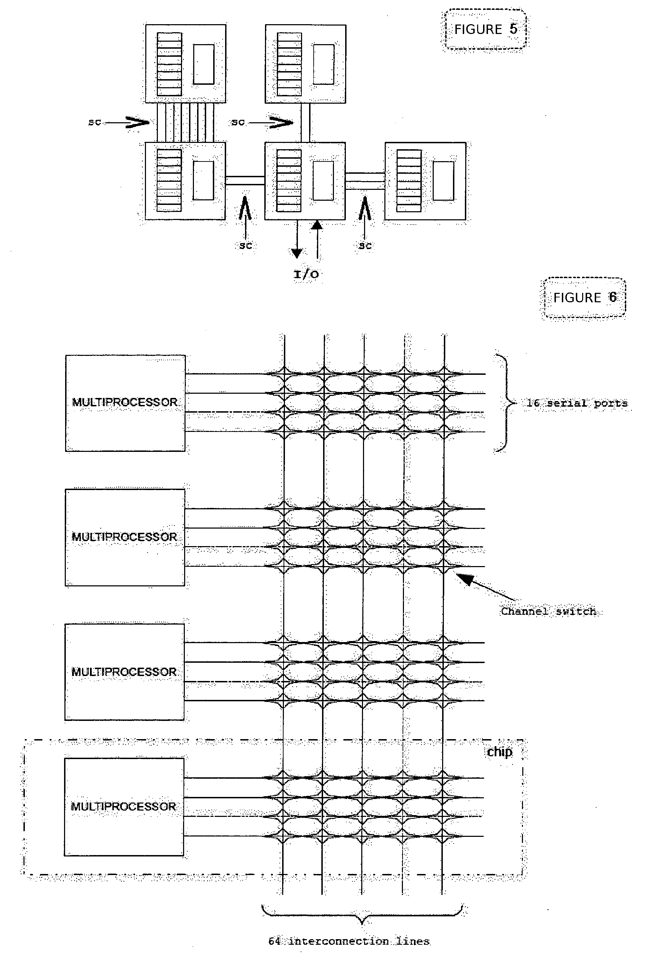

To develop systems with a larger number of processors it is possible to use a number of multiprocessor chips interconnecting them via serial ports. In figure 5 an example of multiprocessors interconnected with the serial channels based on the specific application.

Therefore the microcomputer can be structured in multiprocessor clusters with local shared memory linked via memory locations directly connected between them.

As the speed serial transmission is much higher that the main CK frequency, the time for data transmission is made preferably equal to a CK cycle (example in figure 4).

For example, the CK frequency of the multiprocessor is 100 MHz and the speed of the serial transmission can be 2 Gbps (that is a frequency transmission 20 times higher). The serial lines of communication can be single or differential.

Having developed an architecture with combinatorial paths, that is by combinatorial logic, continuous from the RAM exit port to the entry port of the RAM or to the address port of the PMEM, a longer CK cycle is required compared to the other architectures but it permits a complete instruction to be carried out in a cycle. This is deliberately combined with a fast serial transmission in order to connect, de facto, the locations with the serial transmission (PORTi-TX and PORTj-RX) in which the transfer delay is of one single CK cycle. In this way the management of communication through memory shared locations among processors can happen in the same way and with the same simplicity even if the locations are actually distinct and connected with serial communication.

The innovative characteristic of this system based on Serially Interconnected Multiprocessors (SIMP system) is that the processors in the same chip communicate and cooperate by exchanging data via the locations of the shared memory in a deterministic way, but also the communications between the processors present on different chips are assured and deterministic, they communicate via the locations of the respective shared memory which are interconnected with dedicated serial connections. There is no uncertainty in the communication between any processor of the SIMP system differently from the communication via bus or shared networks. All the processors of the whole system, either the processors in each chip or the ones in different chips, work synchronously communicating in an secure and predictable way. The SIMP system is totally deterministic. This is an important feature for Real-Time applications.

The combination of a programming of the various processors (including their running and synchronization) very simple (for the powerful and single cycle instructions) with all the communication that can be developed through locations of shared memory, together with the completely deterministic functioning and together with the elevated expandability of the multiprocessor, is an innovative feature of the invention.

In a multiprocessor chip it is possible to develop a matrix of switches to connect the serial ports to a set of lines/pad of the chip accessible from outside. The configuration of these switches can occur through software instructions. The chips can then be connected in parallel by connecting these lines together (figure 6).

This way a configurable network is implemented (even dynamically during the system operation therefore this is a circuit switching network) constituted by dedicated serial channels with no uncertainty on the communication.

The chips can be inserted into stackable packages (PoP package) to provide the software engineer with the possibility of adding other chips (by connecting more multiprocessor chips one on the other) to assemble a microcontroller with the number of processors necessary for the application (example in fig. 10).

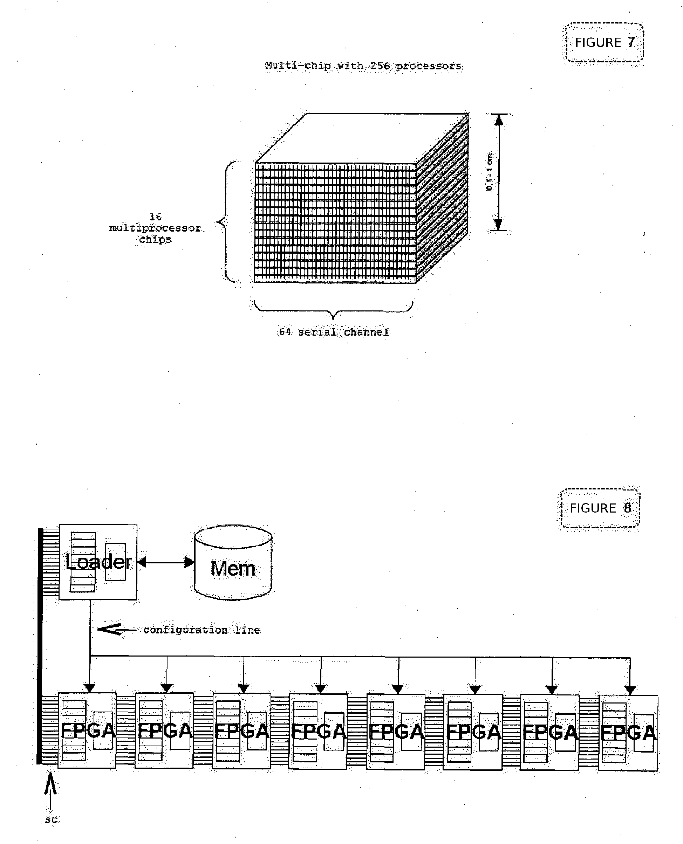

The multi-chip multiprocessor can be implemented by overlapping a certain amount of chips (for example 16, obtaining a total of 256 processors), interconnecting them laterally (example in figure 7) and by inserting the chip stack in a single package with similar technology to those currently used to develop multi-chip memory.

This is possible thanks to the limited number of serial connections, that is to the serial circuit switching network.

A possible alternative is to place in the stack of chips, besides the single multiprocessor chips, also other chips with specific devices such as a RAM memory, an FPU (Floating Point Unit), a mathematical coprocessor unit or other function modules. These devices will be managed and used by the serial channels, directly connected and dynamically configurable.

The serial circuit switching network is designed to implement its components on single chips and enable processors on separate chips to communicate with no uncertainty.

In fig. 7 an example of stack of chips is illustrated, in which serial lines that connect in parallel the multiprocessor chips are developed. They can be implemented by depositing conductive tracks on a lateral surface of the parallelepiped obtained by overlapping silicon wafers and by cutting the stack of wafers in longitudinal slices following the aligned layout of the multiprocessors.

It is important to underline that the multiprocessor architecture, due to the lack of data communication buses and based exclusively on dedicated direct connections, with the execution of any instruction in a CK cycle, with the communication of the processors through memory locations, with direct serial connection between locations, is conceived to have a multiprocessor platform which is easily expandable making an elevated number of processors work together, which is easy to program independently from the number of processors and chips, and which has a completely deterministic operation (important, as already specified, for Real-Time embedded systems).

It is possible to contemplate that software libraries will offer any form of computing capabilities implemented with one or more processors; the implementation of system functions will be easily obtained simply by expanding the multiprocessor and by adding the necessary processors.

It is also possible to contemplate peripheral libraries that will make it unnecessary to produce a micro controller in many versions, each one with specific peripherals and interfaces, as currently in use by the various producers.

The SIMP system aims at implementing almost all the functionalities of an electronic system (embedded and Real-Time) integrated in a chip (SoC), or more specifically we should say in this case "in a multi-chip". The processors become the base elements, the blocks from which a generic digital processing system with embedded application is built.

The multiprocessor can be available as an IP block (Intellectual Property core), like a computer product, like a pre-designed module and defined through a specific description language of the hardware such as the VHDL, to be used in digital programmable devices like the FPGA (Field Programmable Gate Array), thus allowing their inclusion/implementation in an automatic way through the usual synthesis and programming tools of these devices. In this case the multiprocessor is completely parameterized to choose, before the synthesis in the FPGA, the number of processors, the dimensions of all memories (program, private RAM, shared RAM blocks, stack, etc.), the inclusion of specific operating modules (multipliers, etc.), the I/O, and the data dimension.

This allows the multiprocessor to be appropriately dimensioned specifically for the application based on the program to carried out.

By adopting the multiprocessors in programmable logic, to serially interconnect a number of FPGA-multiprocessors, it is possible to use the SerDes modules that they have.

The multiprocessors can also be used in dynamically reconfigurable multi-FPGA systems (MFS), in which the FPGA are reprogrammed during the system operation to replace and alternate the various operating modules, developed with the multiprocessors, which are necessary during the different phases of the operation.

An example of an processing system based on multiprocessor implemented in FPGA interconnected with serial channels (sc) is shown in figure 8. During the operation a specific loading module (Loader) reprograms the FPGA by replacing the multiprocessor that is by changing both the software (the algorithm-program that needs to be carried out), and the hardware structure (the multiprocessor architecture).

Therefore by using this multiprocessor architecture inside programmable logic it is possible to change, beside the number of the processors, also the dimensions and the structure of these processors in order to adapt the multiprocessor to every single application. It is therefore possible to use more FPGA chips, exploiting the integrated SerDes, to obtain a simply programmable, adaptable and scalable SIMP system, which is totally deterministic.

You can proceed by writing the software first and only subsequently dimensioning the multiprocessor.

This will make it possible to easily use the programmable logic without necessarily having to know the hardware description languages and to have indispensable circuit competences, therefore also obtaining an increase of human development productivity and handling higher system complexity thanks also to a higher level of abstraction.

According to an embodiment the multiprocessor architecture provides 16 bit dimension processors for addresses and data, therefore the program memories of every processor can reach 64K location length, the private RAM dimension can be of 32K locations and the total dimension of the shared RAM can be of 32K locations. Nevertheless these maximum memory dimensions allowed by the multiprocessor platform may not be necessary.

Besides the evident possibility of integrating or implementing reduced quantities of the different memories, it is possible to have inside the chip a set of RAM blocks connected through a programming procedure to the areas where they are required. In particular in an FPGA some blocks of integrated RAM are available, these will be used for the private RAM or for the EAMRAM or even for the PMEM according to customer needs.

The integrated multiprocessor chip can also be provided with RAM blocks assignable as required through programming. This in order to better exploit the quantity of memory available in the chip.

If in the chip, RAM are used even for the PMEM then an external memory to the chip will be required, non volatile, from which, when starting the multiprocessor, the instructions will be read and loaded in the internal RAM assigned as program memories.

In conclusion, the flexible architecture of the multiprocessor together with the architecture and the set of instructions of the single processor together with the serial connection make a multiprocessor device (both integrated in a chip or implemented in FPGA) that reaches the technical objective of being extremely easily expandable and can easily program and manage all processors and with a totally deterministic operation. A generic embedded Real-Time system will be developed by adding and interconnecting together a number of processors according to the functionalities requested for the system. The processors are operating modules whose algorithms are can be taken from software libraries as well as specifically developed ad-hoc; also the performance of the modules and the system are predetermined and don't change as a consequence of the computational load.

It is clear that the possibility of implementing parallel algorithms also allows the use of a number of processors to increase the computing power.

## Claims

1. A microcomputer/microcontroller integrated in a chip, comprising one or more homogeneous processors (PM0, PM1, ..., etc.) equal to each other or having similar architecture, these processors having a program memory (PMEM) and a separate data memory (RAM), in which such processors are configured to operate directly on the data memory, the data memory of a processor being divided in a private section, specifically associated to its respective processor and corresponding to a private RAM (PRAM), and one shared section, corresponding to a multi-port shared-common RAM (CRAM), **characterized by** the fact that:
a) between the processors and the memories only dedicated direct and unidirectional connections are provided;
b) each processor (PM0, PM1, ..., etc.) is provided with direct dedicated unidirectional connections with the associated private RAM and with the shared RAM in order to carry out the data reading from any location of the associated private RAM (PRAM) or of the shared RAM (CRAM), the calculation and the subsequent writing of the result in any location of the associated private RAM (PRAM) or of the shared RAM (CRAM), in a single operating cycle;
c) each RAM memory (PRAM, CRAM) is provided with at least one unidirectional writing port and reading port connected to combinatorial type components of the processors, planned for performing the calculation, in order to obtain between those ports some data paths solely defined by combinatorial logic circuits;
d) each of the above processors has a specific conditional block (CB) directly connected to the output of the data memory in order to test the value read from said data memory and choose whether to execute jump instructions or conditioned operative instructions.

2. A microcomputer/microcontroller according to claim 1, in which:
e) each of the above processors is provided with a direct access through reading and writing port to the data memory for carrying out the calculations directly on the RAM memory in each clock cycle, where the access to the data memory occurs only through address lines without control signals; the only signal that controls the writing in the memory, except for an inhibition signal, being a clock signal having a global synchronism signal function;
f) in each of the above processors a unification of data memory and special use operative registers is present, therefore from the private RAM (PRAM) there are direct connections with some locations that coincide with the operative registers amongst which an accumulator register (A), some registers for indirect addressing (INDEX0, INDEX1, INDEX2), a register with the latest result (LAST), a comparison register (COMP) and such direct connections allow the extraction of values contained in them that are used by an arithmetic logic unit (ALU), the conditional block (CB), as well as by an address management block (AMB) of the data memory;
g) each of the above processors include an instruction register (IR), an instruction decoder (ID), an address management block (AMB), an address selector of the program memory (MUX) and is able to execute every kind of instruction, including the conditioned instructions or the jump instructions, both if the jump is carried out or not, always in just one clock cycle; for this purpose the following are present:
- appropriate direct connections such as those between the said registers (A, LAST, INDEX0, COMP), or the said instruction register (IR), and the conditional block (CB);
- of just combinatorial circuit between the conditional block (CB), or the instruction decoder (ID) or the address management block (AMB), and the address selector of the program memory (MUX);
h) the communication between the above processors occur by exchanging data through shared memory locations, in which a certain number of simultaneously shared locations are available in the block of the shared RAM (CRAM) which is a multiport RAM with a pair of ports for reading and writing for each processor.

3. A microcomputer/microcontroller according to claims 1 or 2, **characterized by** the fact that the said program memory (PMEM) is implemented as a multi-port memory or as separate memories connected to each processor.

4. A microcomputer/microcontroller according to any one of the previous claims, **characterized by** the fact that the said processors have an instruction decoder (ID) capable of identifying double version instructions, respectively a version of said instructions being with return from procedure and a further version of said instructions being without return from procedure, in order to save the return instructions at the end of a procedure, by using as last procedure instruction, an operative instruction with a concurrent return.

5. A microcomputer/microcontroller according to any one of the previous claims, **characterized by** the fact that the processors, besides conditioned operative instructions, have iterative operative instructions that is operative instruction with a condition provided at the same time in the instruction that determines the repeated execution of the operation until the condition remains verified.

6. A microcomputer/microcontroller according to any one of the previous claims, **characterized by** the fact that it has a set of serial transceivers, formed by circuital blocks that serially send along a line, the loaded bits to a register, or vice versa, that are connected to some locations of the said shared RAM; in this way defining serial ports that allow, connecting their respective lines, to interconnect memory locations included in distinct multiprocessor chip.

7. A microcomputer/microcontroller according to the previous claim, **characterized by** the fact that it has a set of programmable switches to connect inputs-outputs of the serial transceivers to a set of lines/channels, that is a chip pad or external pins of the package in order to connect in parallel the said specific pads of a number of chips with the objective of developing a serial switching circuit network, that is one can program the switches to make direct connections between pairs of transceivers, namely serial channels of communication between memory locations of distinct chips.

8. A microcomputer/microcontroller according to the previous claim, **characterized by** the fact that the switches can be set up through program instructions and consequently the said network is also configurable dynamically through software, as its serial connections are dedicated, allows non uncertain communications but totally deterministic ones, a very important feature for Real-Time system.

9. A microcomputer/microcontroller according to claim 7, **characterized by** the fact that it can be included in stackable package in order to stack a number of chips interconnecting the pins and so obtain a multiprocessor with a higher number of processors according to the user needs, this way allowing easy expansion of the microcomputer/microcontroller assembling a number of chips one on top of the other.

10. A microcomputer/microcontroller according to claim 7, including a number of overlapping multiprocessor chips and in which, laterally to the stack of chips, corresponding pads of the said serial lines/channels are interconnected between themselves. The electrical connections, implemented laterally to the stack of chips, can be obtained with similar processes to those used to deposit conductive paths on the chip surface.

11. A microcomputer/microcontroller according to any one of the previous claims, **characterized by** the fact that the multiport shared RAM (CRAM) is composed by blocks of various types:
- a first type of RAM bank (SAMRAM) in which is simultaneous access to each location from the different ports is possible and in which, in the case of concurrent writing in one location in the same CK clock cycle, the OR function of the data that the processor try to write is memorized;
- a second type of RAM bank (EAMRAM) in which the read and write access is commuted to the various ports based on specific registers, that preferably will coincide with some locations of the SAMRAM block, and that allow simple double port RAM banks to be used for its development;
and in which the input/output ports (I/O) are mapped in the block of the first type (SAMRAM).

12. A microcomputer/microcontroller according to the previous claim, **characterized by** the fact that it includes a chip in which a series of freely assignable double port RAM banks are available, through the programming of connections with FPGA technology or similar, to the private RAM memories of the processors or to the EAMRAM memories or to the program memories; thereby optimizing the use of a reduced quantity of RAM memory built in the chip and distributing it in the multiprocessor platform according to where this is required for the application.

13. A microcomputer/microcontroller according to claims 6 and 11, **characterized by** the fact of being provided as IP (Intellectual Property) block that is as a completely defined software module and described for the insertion in programmable logic devices and, for this reason, completely parameterized to be able to choose every characteristic of dimension and functionality to be synthesized according to any particular application or function, therefore being completely personalized based on of a desired program to be carried out.

14. A dynamically configurable processing system comprising some microcomputer/microcontrollers according to any of the previous claims implemented in FPGA, or in programmable logics, and that are adapted to communicate serially with each other by connecting some locations of the CRAM memories from the various processors.

15. A system according to claim 14, in which one or more FPGA are reprogrammable during the system operations to substitute some operating modules, implemented through the multiprocessor, with other modules according to the operative requirements of the various phases of the elaboration; the FPGAs, or said programmable logics, being dynamically reprogrammable to change both the software (the algorithm program that needs to be carried out) and the hardware structure (the multiprocessor architecture) optimizing the resources available in the FPGA or in the programmable logic.

## Patentansprüche

1. Ein Mikrocomputer/Mikrocontroller in einem Chip integriert, bestehend aus einem oder mehreren homogenen Prozessoren (PM0, PM1, ..., etc.) gleich einander oder mit einer ähnlichen Architektur, diese Prozessoren mit einem Programmspeicher (PMEM) und einem separaten Datenspeicher (RAM), wobei die obengenannten Prozessoren so konfiguriert sind, direkt auf den Datenspeicher zu betreiben, und der Datenspeicher eines Prozessors in einen privaten Teil aufgeteilt ist, welcher zwar seinem entsprechenden Prozessor zugeordnet ist mit einem privaten RAM (PRAM), und in einen dem gemeinsamen Multiport-RAM (CRAM) entsprechenden gemeinsamen Abschnitt, **dadurch gekennzeichnet, dass**:
a) zwischen Prozessoren und Speichern sind nur spezifische, direkte und einseitige Verbindungen vorgesehen;
b) jeder Prozessor (PM0, PM1, ..., etc.) ist mit direkten spezifischen einseitigen Verbindungen mit dem betreffenden privaten RAM und dem gemeinsamen benutzten RAM ausgerüstet, um in einem einzelnen Arbeitsgang durchführen zu können das Lesen von in jeder Zelle des betreffenden privaten RAM (PRAM) oder des gemeinsamen benutzten RAM (CRAM) gesammelten Daten, die Berechnung und das anschließende Schreiben des Ergebnisses in jeder Lage des entsprechenden privaten RAM (PRAM) oder des gemeinsamen benutzten RAM (CRAM);
c) jedes RAM (PRAM, CRAM) ist mit zumindest einem Anschluss fuer das Schreiben und mindestens einem Lesetor ausgestattet, die unidirektional sind und mit Komponenten des Kombinationstyps der Prozessoren verbunden sind, für die Ausführung der Berechnungen zur Verfügung gestellt, derart dass zwischen diesen Ports einige nur durch kombinatorische Logikschaltungen definierte Wege von Daten bestehen;
d) jeder der obengenannten Prozessoren hat einen speziellen Bedingungsblock (CB), der direkt mit dem Ausgang des Datenspeichers verbunden ist, um den Wert aus dieser Speicherdatenlese zu testen und zu waehlen, ob die Sprungbefehle oder die bedingten Bedienungsanweisungen auszuführen.

2. Ein Mikrocomputer/Mikrocontroller nach Anspruch 1, worin:
e) jeder der Prozessoren ist durch die Lesen- und Schreibenports mit einem direkten Eingang zu den Datenspeicher ausgestattet, für die Ausführung der Berechnungen direkt auf dem RAM-Speicher in jedem Taktzyklus, wo sich der Eingang zum Datenspeicher nur durch die Adressleitungen ohne Steuersignalen ergibt; das einzige Signal, das das Schreiben im Speicher regiert, abgesehen von einer Sperrsignal, ist ein Taktsignal mit einem Funktion des globalen Synchronisationssignals;
f) in jedem der Prozessoren ist eine Vereinheitlichung von Datenspeicher und Betriebsregistern spezieller Verwendung anwesend, daher entstehen aus den privaten RAMs (PRAM) direkte Verbindungen mit einigen Zellen, unter denen ein Akkumulatorregister (A), einige Register für die indirekte Adressierung (Index0, INDEX1, index2), ein das letzte Ergebnis enthaltender Register (LAST), ein Register für den Vergleich (COMP) und diese direkten Verbindungen ermöglichen die Gewinnung der darin enthaltenen Werte, die von einer arithmetisch-logischen Einheit (ALU), von der Bedingungsblock (CB), sowie von einer Steuereinheit der Adressen des Datenspeichers (AMB) verwendet werden;
g) jeder der obengenannten Prozessoren schließt einen Befehlsregister (IR) ein, einen Decoder der Bildung (ID), eine Blockadressenverwaltung (AMB), einen Selektor der Adresse des Programmspeichers (MUX), und ist angepasst, jeden Befehl auszuführen, einschließlich der bedingten Anweisungen oder der Verzweigungsanweisungen, immer in einem einzigen Taktzyklus, sowohl wenn der Sprung erfolgt hat, als auch wenn es nicht stattgefunden hat; für diesen Zweck sind dabei:
- geeignete direkte Verbindungen wie sie zwischen den obengenannten Registern (A, LAST, INDEX0, COMP), oder dem oben erwähnten Anweisungsregister (IR), und der Bedingungsblock (CB);
- rein kombinatorische Schaltungen zwischen dem Bedingungsblock (CB), oder den Befehlsdecodierer (ID), und dem Selektor der Adresse des Programmspeichers (MUX);
h) die Kommunikationen zwischen den oben genannten Prozessoren erfolgen mittels Übergabe von Daten durch gemeinsame genutzte Speicherzellen, wobei eine Reihe von gemeinsamen benutzten Zellen zur gleichen Zeit auf der Bank des gemeinsamen RAM (CRAM) zur Verfuegung steht, das ein Multiport-RAM mit einem Paar von Lesen- und Schreibenports für jeden Prozessor ist.

3. Ein Mikrocomputer/Mikrokontroller nach Anspruch 1 oder 2, **dadurch gekennzeichnet, daß** der oben genannte Programmspeicher (PMEM) als ein Multiport-Speicher oder als zu jedem Prozessor verbundene getrennte Speicher realisiert ist.

4. Ein Mikrocomputer/Mikrocontroller nach einem der vorhergehenden Ansprüche, **dadurch gekennzeichnet, daß** oben genannte Prozessoren einen Befehlsdecodierer (ID) besitzen, in der Lage, Anweisungen in zwei Varianten zu erkennen, beziehungsweise eine Version der Befehle mit der Rückkehr aus dem Verfahren und eine andere Version solcher Anweisungen ohne Rückkehr aus dem Verfahren, derart dass Sie Rückkehranweisungen am Ende einer Prozedur speichern können, indem Sie als letzte Anweisung einer Prozedur eine operative Anweisung mit gleichzeitigem Rückkehr verwenden.

5. Ein Mikroprozessor/Mikrocontroller nach einem der beliebigen vorhergehenden Ansprüche, **dadurch gekennzeichnet, daß** die Prozessoren bedingte Betriebsanweisungen und iterative Betriebsanweisungen besitzen, welche Betriebsanweisungen mit einer gleichzeitig in der Anweisung gegebenen Bedingung sind, die die wiederholte Ausführung der Operation bestimmt, bis die Bedingung erfüllt ist.

6. Ein Mikrocomputer/Mikrocontroller nach einem der beliebigen vorhergehenden Ansprüche, **dadurch gekennzeichnet, dass** es eine Reihe von seriellen Funktransceivern besitzt, die aus Schaltungsblöcken bestehen, welche die in einem Register geladenen Bits auf eine Linie senden, oder umgekehrt, diese seriellen Funktransceivern sind mit einigen Zellen des vorhergenannten gemeinsamen benutzten RAM verbunden; auf diese Weise gewinnt man serielle Ports, welche durch den Kontakt der entsprechenden Zeilen ermöglichen, in getrennten Chips enthaltene Speicherzellen in Verbindung zu setzen.

7. Ein Mikrocomputer/Mikrocontroller nach dem vorangehenden Anspruch, **dadurch gekennzeichnet, dass** es eine Reihe von programmierbaren Schaltern besitzt, um die Eingänge-Ausgänge der seriellen Funktransceivern mit einem Satz von Leitungen/Kanälen zu verbinden, das heist mit "pad" der Chip, oder mit externen "pin" des Behälters, um in parallel diese obengenennten spezifischen Pads mehrerer Chips zu verbinden, um ein leitungsvermitteltes serielles Netzwerk zu erreichen, zwar kann man die Schalter so programmieren, um direkte Verbindungen zwischen Paaren von Transceiver zu schaffen, das heisst serielle Kommunikationskanäle zwischen Speicherplätzen von separaten Chips.

8. Ein Mikrocomputer/Mikrocontroller nach dem vorangehenden Anspruch, **dadurch gekennzeichnet, dass** die Schalter mit Anweisungen der Software einstellbar sind, und infolgedessen ist das vorhergenannte Netzwerk auch dynamisch konfigurierbar, und da die seriellen Verbindungen entsprechend sind, das Netzwerk sebst ermoeglicht eine Kommunikation, welche nicht ganz zufällig ist, sondern voellig determinisch, was ein Merkmal von großer Bedeutung für die Real-Time-Systems ist.

9. Ein Mikrocomputer/Mikrocontroller nach Anspruch 7, **dadurch gekennzeichnet, dass** es in stapelbare Behälter eingeführt werden kann, damit mehr Chips durch Verbindung der Pin uebereinander gelegt werden koennen, und nach den Bedürfnissen des Benutzers ein Multiprozessor mit einer größeren Anzahl von Prozessoren gewonnen werden kann, und dies erlaubt, durch Montage mehrerer Chips auf einander leicht den Mikrocomputer / Mikrocontroller zu erweitern.

10. Ein Mikrocomputer / Mikrocontroller nach Anspruch 7, mit mehreren uebereinander gelegten Chips-Multiprozessor, und wobei seitlich des Stapels von Chips die entsprechenden Pads der obengenannten seriellen Zeilen/Kanäle miteinander verbunden sind. Die seitlich dem Stapel Speicherchips realisierten elektrischen Anschlüsse können durch eine aehnliche Methode erhalten werden, wie das für die Abscheidung leitfähiger Spuren auf der Oberfläche eines Chips verwendete Verfahren.

11. Ein Mikrocomputer/Mikrocontroller nach einem der vorhergehenden Ansprüche, **dadurch gekennzeichnet, dass** das gemeinsame Multiport-RAM (CRAM) aus Blöcken der meisten Arten besteht:
- ein erster Banktyp RAM (SAMRAM), wo man gleichzeitig in jede Zelle aus den unterschiedlichen Ports eintreten kann, und wo die OR-Funktion der Daten, die die Prozessoren zu schreiben versuchen, im Fall der gleichzeitigen Schreiboperationen in eine Zelle im gleichen Zyklus gespeichert wird;
- ein zweiter Banktyp RAM (EAMRAM), worin der Zugang zum Lesen und Schreiben an verschiedenen Ports aufgrund der entsprechenden Register vergeben wird, die vorzugsweise mit einigen Zellen der Bank SAMRAM übereinstimmen werden, und dieser zweite Banktyp RAM ermoeglicht für seine Realisierung die Verwendung von einfachen Dual-Port-RAM-Bänken; und in diesem zweiten Banktyp RAM werden die Ports der Eingabe/Ausgabe (I/O) in dem Block des ersten Typs (SAMRAM) abgebildet.

12. Ein Mikrocomputer/Mikrocontroller nach dem vorhergehenden Anspruch, **dadurch gekennzeichnet, dass** es einen Chip vorsieht, in dem eine Reihe Bänke RAM DualPort zur Verfuegung steht, die man durch Programmierung der Verbindungen mit der FPGA-Technologie oder einer anderen ähnlichen, den RAM-Privatspeichern der Prozessoren oder den Speichern EAMRAM oder den Programmspeichern frei vergeben kann; auf diese Weise gewinnt man die Optimierung der Verwendung einer reduzierten Menge von im Chip konstruierten Speicher RAM, welches in der Plattform Multiprozessor nach der Anforderung für die Anwendung verteilt wird.

13. Ein Mikrocomputer/Mikrocontroller nach den Ansprüchen 6 und 11, **dadurch gekennzeichnet, daß** er als Block IP (Intellectual Property) zur Verfuegung steht, das heisst als ein vollständig definierter und beschriebener Softwaremodul fuer das Einsetzen in programmierbare Logikvorrichtungen, und zu diesem Zweck, vollständig parametriert, damit man jede Eigenschaft der Größe und Funktionalität wählen kann, so daß er nach der speziellen Anwendung oder Funktion synthetisiert und dann genau auf der Grundlage des auszufuehrenden Programms angepasst wird.

14. Ein dynamisch rekonfigurierbares Verarbeitungssystem, das nach einem der vorhergehenden Ansprüche einige in FPGA oder in programmierbarer Logik implementierte Mikrocomputer-Mikrocontroller einbezieht, die seriell in Kommunikation miteinander gesetzt werden, indem man einige Zellen der Speicher CRAM der verschiedenen Multiprozessoren verbindet.

15. Ein System nach Anspruch 14, wobei ein oder mehrere FPGAs während des Betriebs des Systems neu programmiert werden koennen, um einige mittels des Multiprozessors implementierte Funktionsmodule durch andere Module zu ersetzen, aufgrund der betrieblichen Erfordernissen in den unterschiedlichen Entwicklungsstadien; die FPGAs, oder programmierbare Logik genannt, werden dynamisch umprogrammiert, um sowohl die Software (das auszuführende Programm-Algorithmus) als auch die Struktur der Hardware (die Architektur des Multiprozessors) durch Optimierung der in der programmierbaren Logik zur Verfügung stehenden Ressourcen zu ändern.

## Revendications

1. Un micro-ordinateur/microcontrôleur intégré dans une puce, consistant en un ou plusieurs processeurs homogènes (PM0, PM1, ..., etc.) égaux entre eux ou avec une architecture similaire, ces processeurs comportant une mémoire de programme (PMEM) et une mémoire de données distincte (RAM), dans lequel lesdits processeurs sont configurés pour fonctionner directement sur la mémoire de données, la mémoire de données d'un processeur étant divisé en une section privée, en particulier associé au processeur respectif et correspondant à une mémoire vive privée (PRAM) et une section commune, correspondant à la RAM à accès multiples partagée (CRAM), **caractérisé en ce que**:
a) entre les processeurs et les mémoires sont fournis uniquement des connexions dédiées directes et unidirectionnelles;
b) chaque processeur (PM0, PM1, ..., etc.) est prévu de connexions directes réservés unidirectionnelles avec la mémoire RAM privée associée et avec la mémoire RAM partagée afin de réaliser, en un seul cycle de fonctionnement, la lecture de données à partir de n' importe quel emplacement de la mémoire RAM privée associée (PRAM) ou de la mémoire RAM partagée (CRAM), le calcul et l'écriture ultérieure du résultat dans n'importe quel endroit de la mémoire RAM privé associé (PRAM) ou RAM partagée (CRAM);
c) chaque mémoire vive (PRAM, CRAM) est équipée au moins d'une porte d'écriture et au moins d'une porte de lecture unidirectionnelles, associées à des composants de type combinatoire de processeurs, agencé pour effectuer les calculs, afin de disposer entre ces portes certains chemins de données définies uniquement par des circuits logiques combinatoires;
d) chacun des processeurs précités comporte un bloc conditionnel spécifique (CB) connecté directement à la sortie de la mémoire de données afin de pouvoir tester la valeur lue par cette mémoire et de choisir s'il faut exécuter les instructions conditionnelles ou les instructions de saut.

2. Un micro-ordinateur/microcontrôleur conformément à la revendication 1, dans lequel:
e) chacun desdits processeurs est muni d'un accès direct par les portes de lecture et d'écriture à la mémoire de données pour l'exécution des calculs directement sur la mémoire RAM à chaque cycle d'horloge, où l'accès à la mémoire de données est seulement par des lignes d'adressages, sans signaux de commande; le seul signal qui commande l'écriture dans la mémoire, à l'exception d'un signal d'inhibition, étant un signal d'horloge ayant une fonction de signal de synchronisation global;
f) dans chacun desdits processeurs, il ya une unification de la mémoire de données et des registres opérationnels de spéciale utilisation. Ainsi, dans la RAM privé (PRAM) il ya des connexions directes avec certains endroits, y compris un accumulateur (A), certains registres pour l'adressage indirect (INDEX0, INDEX1, INDEX2), un registre avec le dernier résultat (LAST), un registre pour les comparaisons (COMP) et ces connexions directes permettent l'extraction des valeurs qui y sont contenus et qui sont utilisés par une unité de calcul (ALU), par le composante conditionnel (CB), et par un composante de gestion (AMB) des adresses de mémoire;
g) chacun desdits processeurs comprend un registre d'instructions (IR), un décodeur d'instruction (ID), un bloc de gestion d'adresses (AMB), un sélecteur de l'adresse de la mémoire de programme (MUX) et il est adapté pour exécuter chaque instruction y compris les instructions conditionnelles ou les instructions de saut, soit si le saut se fait soit s'il ne fait pas, également dans un seul cycle d'horloge; à cet effet sont les suivants:
- connexions directes appropriées telles que celles entre les registres ci-dessus (A, LAST, INDEX0, COMP), ou le registre d'instruction précitée (IR), et le bloc conditionnel (CB);
- des circuits purement combinatoires entre le bloc conditionnel (CB) ou le décodeur d'instruction (ID), et le sélecteur de l'adresse de la mémoire de programme (MUX);
h) les communications entre lesdits processeurs se produisent avec le passage des données à travers des emplacements de mémoire partagée, dans lequel un certain nombre d'endroits en même temps est partagé dans le banc de la RAM partagée (CRAM) qui est une RAM multiporte avec une paire de portes de lecture et d'écriture pour chaque processeur.

3. Un micro-ordinateur/microcontrôleur conformément à la revendication 1 ou 2, **caractérisé par le fait que** ladite mémoire de programme (PMEM) est réalisée en tant que mémoire à portes multiples, ou bien mémoires distinctes connectées à chaque processeur.

4. Un micro-ordinateur/microcontrôleur selon l'une quelconque des revendications précédentes, **caractérisé par le fait que** lesdits processeurs ont un décodeur d'instruction (ID) capable de reconnaître les instructions en deux versions, respectivement, une version desdites instructions avec retour de procédure et une autre version de ces instructions sans retour de la procédure, afin d'éviter les instructions de retour à la fin d'une procédure, en utilisant, comme la dernière déclaration d'une procédure, une instruction de fonctionnement avec retour contemporain.

5. Un micro-ordinateur/microcontrôleur selon l'une quelconque des revendications précédentes, **caractérisé par le fait que** les processeurs, en plus d'instructions conditionnelles, ont des instructions itératives qui sont instructions opérationnelles comprenant une condition, prévue simultanément dans l'instruction, qui détermine l'exécution de l'opération répétée jusqu'à ce que la condition est vérifiée.

6. Un micro-ordinateur/microcontrôleur selon l'une quelconque des revendications précédentes, **caractérisé par** le fait de posséder un ensemble d'émetteurs-récepteurs sérials, comprenant des circuits qui envoient, en série sur une ligne, les bits chargées dans un registre, ou vice versa, ceux-ci sont liés à certains emplacements desdits RAM partagée; de cette manière on obtient des portes sériales qui permettent, reliant les lignes respectives, de mettre en communication les emplacements de mémoire contenues dans puces multiprocesseur distints.

7. Un micro-ordinateur/microcontrôleur selon la revendication précédente, **caractérisé par le fait qu'**il comporte un ensemble de commutateurs programmables, pour relier les entrées-sorties des émetteurs-récepteurs sérial, à un ensemble de lignes/canaux, c'est à dire "pad" de la puce ou "pin" de l'extérieur récipient, afin de connecter en parallèle lesdits pad spécifiques de plusieurs puces, afin de parvenir à un réseau sériale à commutation de circuits, ce qui signifie que vous pouvez programmer les commutateurs pour créer des connexions directes entre les paires d'émetteurs-récepteurs, c'est à dire pour obtenir des canaux sériales de communication entre des emplacements de mémoire de puces distinctes.

8. Un micro-ordinateur/microcontrôleur selon la revendication précédente, **caractérisé par le fait que** les commutateurs sont réglés à l'aide des instructions de programme et par conséquent ledit réseau est également configurable dynamiquement par un logiciel, alors, étant donné que les connexions sériales sont dédiés, permet une communication non aléatoire mais complètement déterministe, une caractéristique de grande importance pour les systèmes temps réel.

9. Un micro-ordinateur/microcontrôleur selon la revendication 7, **caractérisé par le fait qu'**il peut être inséré dans des conteneurs empilables pour empiler plusieurs puces en reliant les pin et obtenir un multiprocesseur avec un plus grand nombre de processeurs en fonction des besoins de l'utilisateur, ce qui permet d'étendre facilement micro-ordinateur/microcontrôleur par l'assemblage de plusieurs puces une au-dessus de l'autre.

10. Un micro-ordinateur/microcontrôleur selon la revendication 7, comprenant plusieurs puces multiprocesseur superposée et dans lequel, latéralement à la pile de puce, les pad correspondants à les lignes/canaux sérial ci-dessus sont reliés entre eux. Les raccordements électriques, réalisés latéralement à la pile de puce, peuvent être obtenues par des procédés similaires à ceux utilisés pour le dépôt de pistes conductrices sur la surface d'une puce.

11. Un micro-ordinateur/microcontrôleur selon l'une quelconque des revendications précédentes, **caractérisé par le fait que** la mémoire RAM multiporte partagée (CRAM) est composé de blocs de différents types:
- un premier type de bloc de mémoire RAM (SAMRAM) dans laquelle chaque emplacement est accessible simultanément par les différents portes et dans lequel, dans le cas d'écritures simultanées vers un emplacement dans le même cycle de CK, est mémorisée la fonction OR calculée sur les données que les processeurs envie d'écrire;
- une mémoire vive du second type (EAMRAM) dans laquelle l'accès à la lecture et à l'écriture est assigné aux différentes portes sur la base des registres spécifiques qui coincident de préférence avec certains emplacements de la SAMRAM, et qui permet d'utiliser pour sa réalisation de simples bancs de mémoire vive à double accès (double-port);
et dans lequel les portes de l'entrée/sortie (I/O) sont mappés dans le bloc du premier type (SAMRAM).

12. Un micro-ordinateur/microcontrôleur selon la revendication précédente, **caractérisé par le fait qu'**il fournit une puce dans laquelle il existe un groupe de bancs de mémoire vive double porte librement assignables, par la programmation des connexions en utilisant la technologie FPGA ou autre similaire, à les mémoires privées RAM des processeurs ou à les mémoires EAMRAM ou à les mémories de programme; pour obtenir ainsi d'optimiser l'utilisation d'une quantité réduite de mémoire RAM intégrée sur la puce par l'allocation à la plate-forme multiprocesseur selon la nécessité de l'application.

13. Un micro-ordinateur/microcontrôleur selon les revendications 6 et 11, **caractérisé par le fait qu'**il est mis sous forme de bloc IP (Intellectual Property - propriété intellectuelle) qui est un module de logiciel complètement défini et décrit pour l'insertion dans des dispositifs logiques programmables et, à ce fin, entièrement paramétré en mesure de choisir quelconque caractéristique pour le dimensionnement et la fonctionnalité, de manière à être synthétisé selon l'application particulière ou une fonction et donc être personalisé exactement sur la base du programme à exécuter.

14. Un système de traitement reconfigurable dynamiquement comprenant certains micro-ordinateur/microcontrôleur selon l'une quelconque des revendications précédentes, mis en oeuvre dans FPGA, ou dans des logiques programmables, et qui sont mis en état de communiquer sériellement les uns avec les autres en reliant certains emplacements de la mémoire CRAM des différents multiprocesseurs.

15. Un système selon la revendication 14, dans lequel une ou plusieurs FPGA peuvent être reprogrammé pendant le fonctionnement du système pour remplacer certains modules fonctionnels, mis en oeuvre par l'intermédiaire du multiprocesseur, avec d'autres modules, en fonction des exigences opérationnelles qui y sont dans différents moments du calcul; les FPGA, ou logiques programmables, sont reprogrammées dynamiquement afin de changer à la fois le software (le programme algorithme à exécuter) et la structure hardware (l'architecture du multiprocesseur) optimisant ainsi les ressources disponibles dans la logique programmable.
